# EUROPÄISCHE PATENTSCHRIFT

(11) **EP 1 585 601 B1**
(45) Veröffentlichungstag und Bekanntmachung des Hinweises auf die Patenterteilung: **28.10.2009**
(21) Anmeldenummer: 03815348.2
(22) Anmeldetag: 19.11.2003
(51) Int. Cl.: B05B 7/08, B05B 7/00, F01D 25/00, F04D 29/70

(54) **VERFAHREN UND EINSPRITZDÜSE ZUM DURCHSETZEN EINER GASSTRÖMUNG MIT FLÜSSIGKEITSTRÖPFCHEN**
METHOD AND INJECTION NOZZLE FOR INTERSPERSING A GAS FLOW WITH LIQUID DROPLETS
PROCEDE ET BUSE DE PULVERISATION PERMETTANT DE PROJETER DES GOUTTES DE LIQUIDE DANS UN FLUX DE GAZ

(30) Priorität: 24.01.2003 CH 1042003; 26.08.2003 CH 14532003
(43) Veröffentlichungstag der Anmeldung: 19.10.2005
(73) Patentinhaber: TURBOTECT LTD., 5401 Baden (CH)
(72) Erfinder: STALDER, Jean-Pierre, CH-5400 Baden (CH)
(74) Vertreter: Schneider Feldmann AG Patent- und Markenanwälte
(86) Internationale Anmeldenummer: PCT/CH2003/000765
(87) Internationale Veröffentlichungsnummer: WO 2004/065020

(56) Entgegenhaltungen:
- EP-A- 0 248 539
- WO-A-98/01705
- US-A- 4 083 932
- US-A- 5 193 976
- US-A- 5 452 856
- US-A- 5 738 281

## Beschreibung

Die vorliegende Erfindung betrifft ein Verfahren zum Durchsetzen einer Gasströmung mit Flüssigkeitströpfchen, gemäss Oberbegriff des ersten Patentanspruchs. Eine ihrer bevorzugten Anwendungen liegt auf dem Gebiet der industriellen Gasturbinen, wo sie zur Nassreinigung eines Gasturbinenverdichters angewendet werden kann. Die Erfindung betrifft auch eine Einspritzdüse zur Durchführung des Verfahrens, gemäss Oberbegriff eines weiteren unabhängigen Patentanspruchs. Ferner betrifft die Erfindung eine Strömungsmaschine, z. B. einen Gasturbinenverdichter, gemäss Oberbegriff eines weiteren unabhängigen Patentanspruchs.

Die Erfindung wird in dieser Schrift anhand des Anwendungsbeispiels der Nassreinigung eines Gasturbinenverdichters erläutert. Die Erfindung kann aber auch in anderen Gebieten der Technik Anwendung finden, so z. B. in der Kraftwerkstechnik und anderswo, wo auch immer eine Gasströmung mit einer Flüssigkeit durchgesetzt wird.

Alle Gasturbinenanlagen leiden unter Verschmutzung der Verdichterschaufeln. Dieses Phänomen wird durch feste und flüssige Teilchen in der Einlassluft verursacht, welche trotz Filtration der Einlassluft in die Turbinenanlage gelangen und an den Verdichterschaufeln haften bleiben. Solche Teilchen können Staub, Pollen, Insekten, Öl, Meersalz, Industriechemikalien, unverbrannte Kohlenwasserstoffe, Russpartikel etc. umfassen. Die Verschmutzung der Verdichterschaufeln führt zu Wirkungsgrad- und Leistungsverlusten der Gesamtanlage von bis ca. 10 % und mehr. Um diese Verluste zu vermeiden oder zu verringern, wird versucht, die Verdichterschaufeln zu reinigen. Aus dem Stand der Technik sind verschiedene Vorrichtungen und Verfahren zum Reinigen der Verdichterschaufeln bekannt.

Traditionelle Reinigungsverfahren beruhen auf der sanften Abrasion durch Reis, Nussschalen oder dergleichen während des Betriebs der Anlage. Diese sanften Abrasionsmittel werden der Einlassluft beigegeben und in der Turbine verbrannt. Diese einfachen Verfahren sind für moderne Turbinen jedoch ungeeignet, besonders für solche, deren Verdichterschaufeln mit Schutzschichten und deren Brennkammer sowie Turbinenschaufelkühlungen mit modernster Technologien versehen sind.

Heute werden für die Reinigung moderner Gasturbinenverdichter drei Verfahren angewendet:
(i) Manuelle Reinigung bei still stehender Anlage. Dieses Verfahren ergibt eine effiziente Teil-Reinigung, kann aber in der Praxis nur bei einem geplanten Stillstand, bei einer Inspektion oder Überholung der Anlage durchgeführt werden. Ohne den Verdichter-Zylinder zu öffnen kann nur die erste Leitreihe manuell, d. h. von Hand, gereinigt werden.
(ii) Offline-Nassreinigung (d. h. Reinigung mit StarterMotor, Crankwash, bei still stehender und abgekühlter Turbine). Als Reinigungsflüssigkeiten werden Wasser, Gemische von Wasser mit Verdichterreinigern auf Wasserbasis oder auf Lösungsmittelbasis, oder derartige Gemische mit Frostschutzmittelzusatz verwendet. Dieses Verfahren ist effizient, weil die ganze VerdichterBeschaufelung des Rotors sowie des Stators und nicht bloss die erste Leitreihe gereinigt werden kann. Es hat aber den Nachteil, dass es bei still stehender Turbine durchgeführt werden muss und daher Produktionsverluste verursacht.
(iii) Online-Nassreinigung (d. h. Reinigung während des Betriebes) mit den unter (ii) angegebenen Reinigungsflüssigkeiten. Dabei werden die Verdichterschaufeln möglichst flächendeckend und gleichmässig mit der Reinigungsflüssigkeit benetzt und die Schmutzpartikel gelöst. Dieses Reinigungsverfahren kann bei laufender Turbine durchgeführt werden, so dass es keine Produktionsausfälle verursacht. Die vorliegende Erfindung bezieht sich auf die Online-Nassreinigung (iii).

Bei den bisher für die Online-Nassreinigung verwendeten Einspritzdüsen kann zwischen Niederdruckdüsen und Hochdruckdüsen unterschieden werden. Die ersteren arbeiten mit einem Druck von ca. 3 bis 15 bar und erzeugen Tröpfchen mit Durchmessern von ca. 30 bis 1000 µm, während die letzteren mit einem Druck von ca. 15 bis 90 bar arbeiten und Tröpfchendurchmesser von ca. 3 bis 30 µm erzeugen. Üblicherweise wird eine feine Zerstäubung der Reinigungsflüssigkeit angestrebt, damit eine möglichst flächendeckende und gleichmässige Benetzung der Verdichterschaufeln erfolgt, um deren gründliche Reinigung zu gewährleisten. Die Zerstäubung kann auch eine Temperaturabsenkung der angesaugten Verdichterluft durch Verdampfung der Flüssigkeitsmasse bewirken. Trotz dieses an sich erwünschten Nebeneffektes wird ein möglichst kleiner Mengenfluss an Reinigungsflüssigkeit angestrebt, um durch den Massenstrom der Reinigungsflüssigkeit inklusive mitgetragene Schmutzpartikel erzeugte weitere Nebeneffekte im Verdichter (mögliche Erosion) und in der Turbine (mögliche Flameouts) zu vermeiden oder zumindest gering zu halten.

Gemäss gängiger Lehre des Stands der Technik wird eine effiziente Benetzung der Verdichterschaufeln durch gleichmässig verteilte Tröpfchen erzielt. Die Tröpfchen müssen so klein sein, dass sie die Verdichterschaufeln nicht erodieren, und so leicht, dass sie nicht durch die Gravitationskraft zu stark nach unten abgelenkt werden und die Verdichterschaufel nicht erreichen. Die Konstruktion der Einspritzdüsen ist ausschlaggebend, um die genannten Anforderungen zu erfüllen und somit eine effiziente Reinigung zu gewährleisten. Dies weil die Luftgeschwindigkeit im Ansaugkanal durch Verengung der Querschnitte bis auf ca. 180 m/s am Eintritt der erste Verdichterleitreihe beschleunigt wird. Um eine gute Tröpfchenverteilung in der Luftströmung zu erreichen, ist es vorteilhaft, je nach Leistungsklasse der Maschine, eine grössere Anzahl (bis ca. 40 und mehr Düsen) im Verdichter-Ansaugluftsammler angeordneter Einspritzdüsen vorzusehen.

Ein Verfahren und eine Vorrichtung zur Nassreinigung eines Verdichters ist aus dem US-Patent Nr. 5,193,976 (S. Kolev et al.) bekannt. Gemäss dieser Schrift wird mittels einer oder mehrerer Einspritzdüsen eine Reinigungsflüssigkeit in den Verdichter-Ansaugluftsammler eingespritzt. Die Einspritzung erfolgt in Form eines Kegels, dessen Öffnungswinkel ca. 90° beträgt. Die Einspritzdüsen sind Zerstäuberdüsen, welche in einem Kugelgelenk verstellbar in der Gehäusewandung des Verdichters montiert sind. Dieses Verfahren und diese Einspritzdüsen eignen sich sehr gut für kleine und Mittelgrosse Gasturbinen mit Leistungen von ca. 5-180 MW. Grössere Gasturbinen weisen jedoch Leistungen von 180-350 MW und mehr auf und bedingen deshalb entsprechend grössere Ansaugluftquerschnitte sowie entsprechend längere Verdichterschaufeln, insbesondere der ersten Verdichterleitreihe. Für solch grosse Hochleistungs-Gasturbinen reichen die im US-Patent Nr. 5,193,976 offenbarten Einspritzdüsen nicht mehr gut aus um eine effiziente und gleichmässige Durchsetzung mit Flussigkeitströpfchen des Luftquerschnitts bei der Einspritzebene zu erreichen. Die von ihnen ausgestossenen Flüssigkeitströpfchen würden zu früh von der Ansaugluftströmung erfasst, von ihrer ursprünglichen Flugbahn abgelenkt und wegtransportiert. Dadurch ist ein effizientes Durchsetzen der gesamten Ansaugluftströmung mit den Flüssigkeitströpfchen kaum möglich.

Aus dem Stand der Technik sind Düsen bekannt, aus welchen gleichzeitig eine Flüssigkeit und ein Gas, üblicherweise Luft, ausgestossen werden kann. Die ausgestossene Luft dient bei diesen so genannten Zweistoffdüsen meistens dazu, den Flüssigkeitsstrahl in sehr kleine Tröpfchen zu zerteilen bzw. zu zerstäuben. Die Schrift WO-98-01705 offenbart eine Zweistoffdüse zum Zerstäuben einer Flüssigkeit. Die Düse wird mittels Mikrostrukturierung aus geschichteten Halbleitermaterialien hergestellt. Sie dient zur Bildung möglichst gleichartiger Flüssigkeitströpfchen mit kleinem Durchmesser von 10 µm oder weniger. Das US-Patent Nr. 6,267,301 (J. Haruch) lehrt eine zweifache Zerstäubung der Flüssigkeit. In einer Düsenvorkammer wird der Flüssigkeit Luft beigemischt, um eine höhere Austrittsgeschwindigkeit und eine effizientere Zerstäubung zu erreichen. Ausserdem wird Luft in einem Anstellwinkel auf den aus einer Flüssigkeitsaustrittsöffnung ausgetretenen Flüssigkeitsstrahl ausgestossen, d. h. die Luft weist zumindest eine senkrecht zum Flüssigkeitsstrahl stehende Geschwindigkeitskomponente auf. Dadurch wird eine feine Zerstäubung erzielt, wie sie zu Befeuchtungs- oder Kühlzwecken erforderlich ist.

Aus US-60 32 872 ist eine Düse gemäß dem Oberbegiff des Anspruchs 1 bzw. des Anspruchs 13 bekannt.

Die Schrift EP-0'248'539 offenbart eine Düse zum Zerstäuben eines flüssigen Brennstoffes und dessen Vermischung mit Luft in einem so genannten Premix-Brenner. In einer Ausführungsform wird der Brennstoff aus einer Flüssigkeitseinspritzöffnung in eine erste Vorbrennkammer und von dort aus in eine zweite Vorbrennkammer ausgestossen. In der zweiten Vorbrennkammer wird der Brennstoff mit Luft aus einem ersten ringförmigen Einlass verwirbelt. Das Gemisch wird zusammen mit Luft aus einem zweiten ringförmigen Einlass in die Brennkammer ausgestossen.

Es sind ferner Zweistoffdüsen bekannt, bei welchen eine oder mehrere Luftschichten einen Flüssigkeitsstrahl umhüllen oder eingrenzen. So ist z. B. gemäss den US-Patente Nr. 2,646,314 (D. J. Peeps) oder Nr. 4,961,536 (J.-Y. Correard) eine ringförmige Luftschicht koaxial und parallel zum Flüssigkeitsstrahl ausgerichtet. Das US-Patent Nr. 5,452,856 (J. Pritchard) offenbart eine Düse, bei welcher ein ausgestossener Flüssigkeitsfächer mittels gleichzeitig ausgestossener Luft bezüglich Grösse und Form veränderbar ist. Derartige Düsen werden z. B. in Spritzpistolen für die Zerstäubung von Lacken und Farben verwendet. Sie sind jedoch für den Einsatz zur Nassreinigung eines grossen Gasturbinenverdichters, wo die Geschwindigkeit der Ansaugluft bei der Einspritzstelle ca. 30-80 m/s und vor der ersten Verdichterleitreihe bis ca. 180 m/s beträgt, ungeeignet. Diese Düsen wurden für die Einspritzung einer Flüssigkeit in standardmässigen atmosphärischen Umgebungsbedingungen konzipiert. Die äusserst fein zerstäubten Tröpfchen könnten entweder die Strömungsgrenzschicht nicht durchdringen oder würden von der Luftströmung sofort abgelenkt, so dass sich eine sehr schlechte Durchsetzung der Luftströmung und damit eine schlechte Benetzung der Schaufelflächen ergäbe. Ein grosser Anteil der Flüssigkeit würde so von der Strömung an die Wand des Ansaugluftkanals gedrückt; diese Flüssigkeit ist für die Reinigung nicht verwendbar und kann Erosionsprobleme hauptsächlich an der ersten Rotor-Verdichterschaufelreihe verursachen.

Das US-Patent Nr. 5,738,281 (Z. Zurecki et al.) offenbart eine Gasdüse, bei welcher das ausgestossene Gas durch ein gleichzeitig ausgestossenes Hilfsgas von der Umgebung abgeschirmt wird. Das Hilfsgas wird durch ein poröses Medium ausgestossen, derart, dass es ein das Gas umhüllendes Kissen bildet.

Ausserdem offenbart das US-Patent Nr. 4,083,932 (Muraco et al.) eine Düse, aus welcher Flüssigkeitströpfen ausgestossen werden können, um eine Gaströmung von saueren Materialen zu reinigen. Um dieser Düse herum wird gleichzeitig einen Gas ausgestossen, derart, dass die Düse von der Gasströmung abgeschirmt wird.

Zusammenfassend lässt sich sagen, dass einerseits die aus dem Stand der Technik bekannten Zweistoffdüsen für ganz andere Anwendungen konzipiert und deshalb für ein Durchsetzen starker Gasströmungen mit Flüssigkeitströpfchen untauglich sind. Die bekannten, für die Nassreinigung von Gasturbinenverdichtern konzipierten Düsen andererseits ergeben nur bei Gasturbinen kleiner und mittlerer Leistungsklasse befriedigende Benetzungen der Schaufelfächen und daher gute Reinigungsresultate.

Es ist daher eine Aufgabe der Erfindung, ein Verfahren zum Durchsetzen einer Gasströmung mit Flüssigkeitströpfchen anzugeben, nach welchem die Flüssigkeitströpfchen die Gasströmung möglichst homogen durchsetzen. Die Flüssigkeitströpfchen sollen insbesondere eine kontrollierte Grösse aufweisen, die in der gewünschten Bandbreite möglichst unverändert bleibt. Es ist eine weitere Aufgabe der Erfindung, eine Einspritzdüse zur Durchführung des Verfahrens zu schaffen. Das Verfahren und die Düse sollen z. B. in Hochleistungsklassen-Gasturbinen anwendbar sein, wo die Gasströmung grosse Geschwindigkeiten, grosse Massenströme und grosse Durchströmungsquerschnitte aufweisen.

Die Aufgabe wird gelöst durch das erfindungsgemässe Verfahren und die erfindungsgemässe Einspritzdüse, wie sie in den unabhängigen Patentansprüchen definiert sind. Ein weiterer unabhängiger Patenanspruch bezieht sich auf das Anwendungsbeispiel der Nassreinigung eines Gasturbinenverdichters.

Im erfindungsgemässen Verfahren zum Durchsetzen einer Gasströmung mit Flüssigkeitströpfchen werden die Flüssigkeitströpfchen in die Gasströmung eingespritzt. Ein Hilfsgas wird gleichzeitig mit den Flüssigkeitströpfchen in die Gasströmung eingespritzt. Dabei ist die Einspritzgeschwindigkeit des Hilfsgases grösser als die Einspritzgeschwindigkeit der Flüssigkeitströpfchen, so dass das eingespritzte Hilfsgas die eingespritzten Flüssigkeitströpfchen bezüglich Flugbahn und Grösse stabilisiert, teilweise von der Gasströmung abschirmt und/oder in die Gasströmung mitreisst bzw. hinein beschleunigt. Die Einspritzgeschwindigkeit des Hilfsgases kann z. B. mindestens zweimal grösser, vorzugsweise mindestens fünfmal grösser und beispielsweise mindestens zehnmal grösser sein als die Einspritzgeschwindigkeit der Flüssigkeitströpfchen.

Das erfindungsgemässe Verfahren kann bspw. zum Durchsetzen der Ansaugluftströmung eines Gasturbinenverdichters mit Tröpfchen einer Reinigungsflüssigkeit angewendet werden. Im erfindungsgemässen Verfahren zur Nassreinigung eines Gasturbinenverdichters, welcher einen von Ansaugluft durchströmten Ansaugluftsammler aufweist, wird eine Reinigungsflüssigkeit in Form von Flüssigkeitströpfchen in den Ansaugluftsammler eingespritzt, und die Flüssigkeitströpfchen werden von der Ansaugluftströmung zu den zu reinigenden Teilen des Gasturbinenverdichters transportiert, um diese zu reinigen. Die Flüssigkeitströpfchen werden in die Ansaugluftströmung eingespritzt. Ein Hilfsgas wird gleichzeitig mit den Flüssigkeitströpfchen in die Ansaugluftströmung eingespritzt. Dabei ist die Einspritzgeschwindigkeit des Hilfsgases grösser als die Einspritzgeschwindigkeit der Flüssigkeitströpfchen, so dass das eingespritzte Hilfsgas die eingespritzten Flüssigkeitströpfchen bezüglich Flugbahn und Grösse stabilisiert, teilweise von der Ansaugluftströmung abschirmt und/oder in die Ansaugluftströmung mitreisst. Die Einspritzgeschwindigkeit des Hilfsgases kann z. B. mindestens zweimal grösser, vorzugsweise mindestens fünfmal grösser und beispielsweise mindestens zehnmal grösser sein als die Einspritzgeschwindigkeit der Flüssigkeitströpfchen.

Die erfindungsgemässe Einspritzdüse zur Durchführung des erfindungsgemässen Verfahrens beinhaltet eine die Einspritzdüse zur Gasströmung hin begrenzende Grundfläche, eine Flüssigkeitseintrittsöffnung und eine Gaseintrittsöffnung, mindestens eine mit der Flüssigkeitseintrittsöffnung verbundene Flüssigkeitsaustrittsöffnung und mindestens eine mit der Gaseintrittsöffnung verbundene Gasaustrittsöffnung. Die Einspritzdüse ist derart beschaffen, dass die mindestens eine Flüssigkeitsaustrittsöffnung auf mindestens einem aus der Grundfläche in die Gasströmung hineinragenden Vorsprung angeordnet ist. Die Höhe des mindestens einen Vorsprungs über der Grundfläche kann z. B. 2 bis 9 mm und vorzugsweise 3 bis 5 mm betragen.

Die erfindungsgemässe Einspritzdüse kann bspw. zum Durchsetzen der Ansaugluftströmung eines Gasturbinenverdichters mit Tröpfchen einer Reinigungsflüssigkeit verwendet werden. Die erfindungsgemässe Strömungsmaschine, bspw. Gasturbinenverdichter, weist einen eine Gehäusewandung aufweisenden Strömungskanal, bspw. einen Ansaugluftkanal, auf, wobei in der Gehäusewandung mindestens eine erfindungsgemässe Einspritzdüse montiert ist.

Eine weitere Ausführungsform einer erfindungsgemässen Strömungsmaschine, bspw. Gasturbinenverdichters, weist einen eine Gehäusewandung aufweisenden Strömungskanal, bspw. einen Ansaugluftkanal, auf, wobei in der Gehäusewandung mindestens eine Einspritzdüsse montiert ist, welche eine Flüssigkeitseintrittsöffnung und mindestens eine mit der Flüssigkeitseintrittsöffnung verbundene Flüssigkeitsaustrittsöffnung aufweist. Die Einspritzdüse weist ferner eine Gaseintrittsöffnung und mindestens eine mit der Gaseintrittsöffnung verbundene Gasaustrittsöffnung auf.

Vorteilhafte Ausführungsformen der Verfahren und der Einspritzdüse sind in den abhängigen Patentansprüchen definiert.

Durch die Erfindung wird eine bessere Kontrolle der räumlichen Verteilung der Flüssigkeitströpfchen in die Tiefe und Breite des Gasströmungsquerschnitts und der Grössenverteilung der Flüssigkeitströpfchen erreicht. Erfindungsgemäss übt das Hilfsgas einen Stabilisierungs-, einen Abschirm- und einen Mitreiss- und Beschleunigungseffekt auf die ausgestossenen Flüssigkeitströpfchen aus. Gegenüber dem Stand der Technik ergibt die Erfindung insbesondere folgende Vorteile:
- Die Flüssigkeitströpfchen werden weniger und zeitlich später durch die Gasströmung abgelenkt.
- Die Strömungsgrenzschicht entlang der Gehäusewandung wird von den Flüssigkeitströpfchen effizienter durchdrungen.
- Die Flüssigkeitströpfchen haben in der Gasströmung eine besser kontrollierte Flugbahn.
- Der Öffnungswinkel des Fächers, in dem die Flüssigkeitströpfchen ausgestossen werden, ist stabiler.

Diese und andere vorteilhafte Effekte bewirken, dass zumindest ein Teil der Flüssigkeitströpfchen die Gasströmung effizienter durchsetzt als ohne Hilfsgas.

Erfindungsgemäss wird eine relativ breite Häufigkeitsverteilung (z. B. Gauss-Verteilung) von verschiedenen Tröpfchendurchmessern, bspw. zwischen 50 und 250 µm angestrebt. Flüssigkeitströpfchen mit unterschiedlich grossen Durchmessern werden unterschiedlich weit in die Gasströmung eindringen, wodurch sich eine bessere Durchsetzung der Gasströmung mit den Flüssigkeitströpfchen ergibt.

Im Folgenden wird die Erfindung anhand von Zeichnungen detailliert erläutert.

Die Figuren 1-3 zeigen schematisch das erfindungsgemässe Verfahren, nämlich:
- Fig. 1: Teile zweier Ausführungsformen (a), (b) einer erfindungsgemässen Einspritzdüse mit den austretenden Medien bei nicht vorhandener Gasströmung in einer schematischen Seitenansicht,
- Fig. 2: einen Teil einer erfindungsgemässen Einspritzdüse mit den austretenden Medien bei vorhandener Gasströmung in einer schematischen Seitenansicht,
- Fig. 3: einen Teil einer erfindungsgemässen Einspritzdüse mit den austretenden Medien in einer schematischen Frontalansicht, d. h. einer Ansicht auf die Einspritzebene.

Die Figuren 4-6 zeigen eine bevorzugte Ausführungsform der erfindungsgemässen Einspritzdüse, nämlich

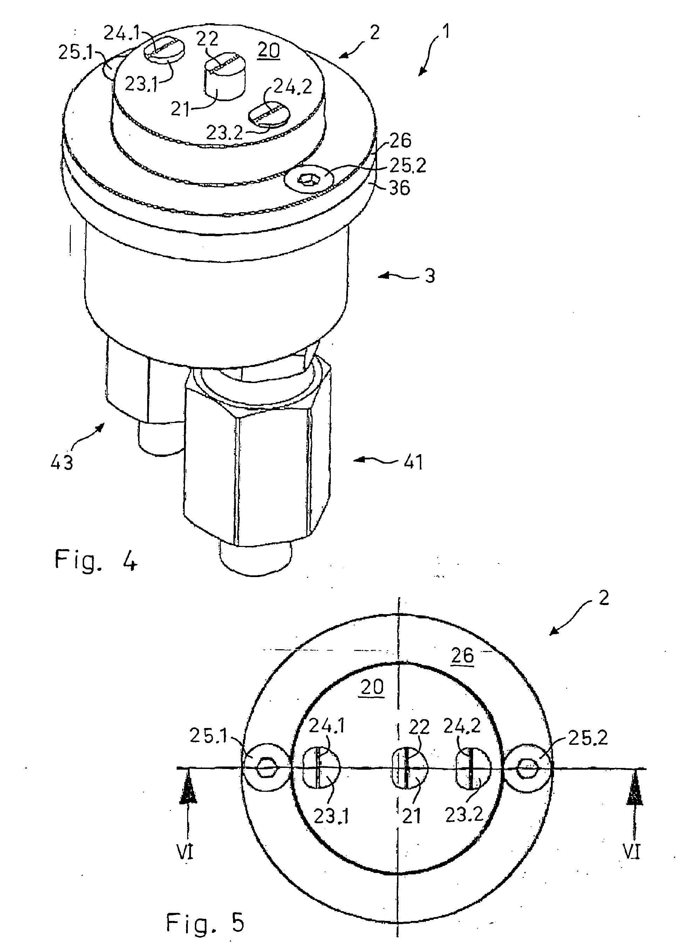

- Fig. 4: eine Ausführungsform der erfindungsgemässen Einspritzdüse in einer perspektivischen Ansicht,
- Fig. 5: die Einspritzdüse von Fig. 4 in einer Draufsicht und

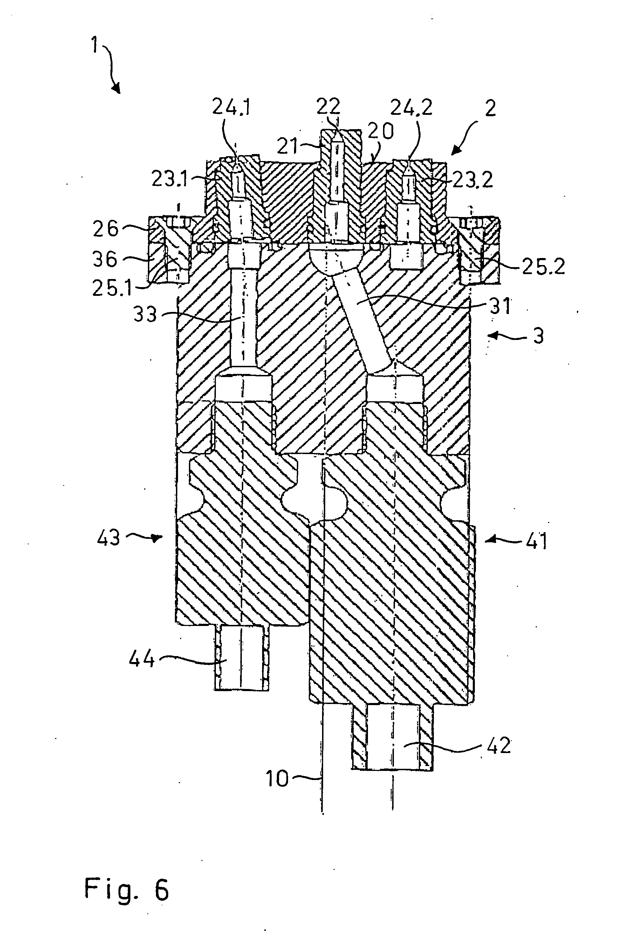

- Fig. 6: die Einspritzdüse von Fig. 4 und 5 im Längsschnitt, entlang Linie VI-VI in Fig. 5.

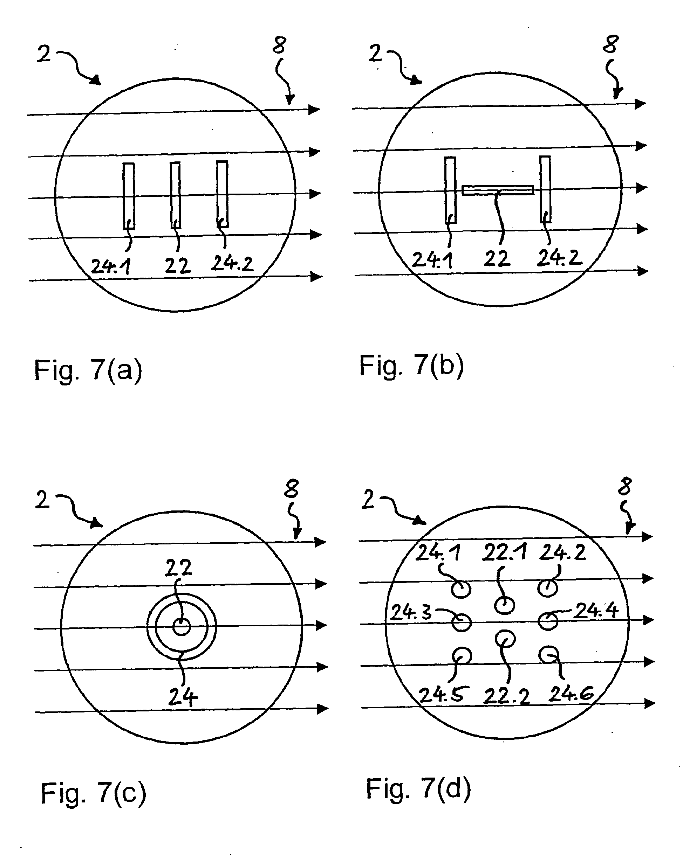

- Fig. 7: zeigt verschiedene Ausführungsformen der erfindungsgemässen Einspritzdüse in schematischen Draufsichten und

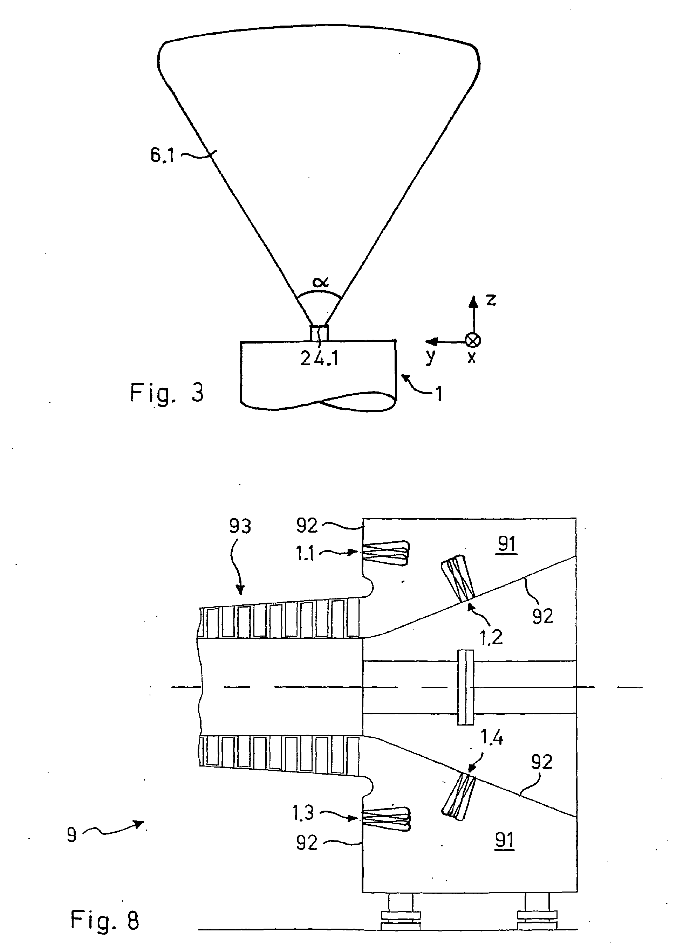

- Fig. 8: zeigt schliesslich einen erfindungsgemässen Gasturbinenverdichter in einem schematischen Längsschnitt durch die Einlaufpartie.

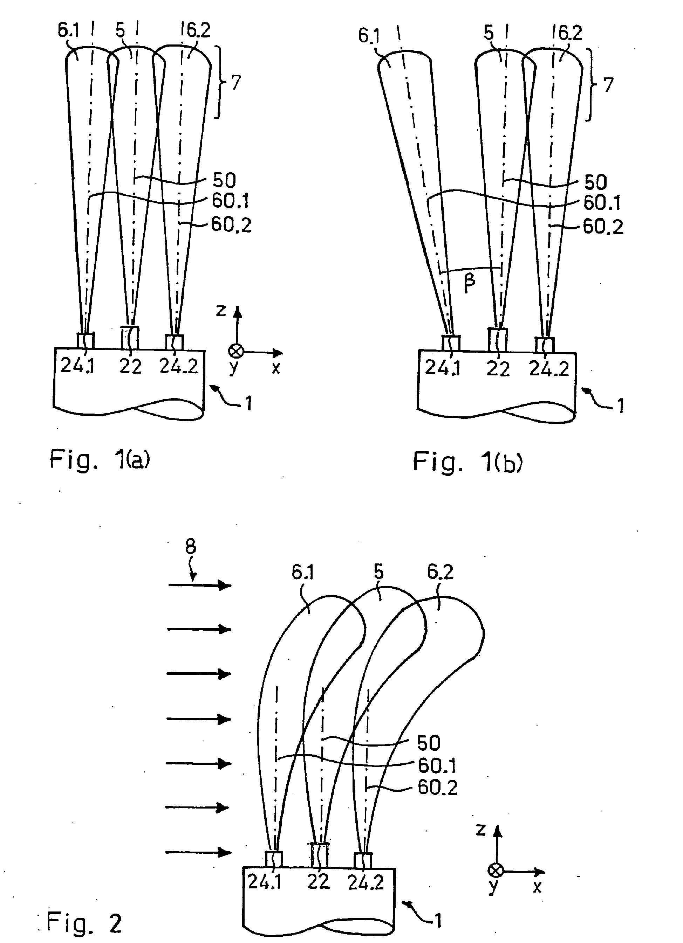

In **Figur 1(a)** ist schematisch der obere Teil einer ersten Ausführungsform einer erfindungsgemässen Einspritzdüse 1 in einer Seitenansicht dargestellt. In dieser Darstellung wird vorerst aus didaktischen Gründen angenommen, es sei keine Gasströmung vorhanden. Aus einer Flüssigkeitsaustrittsöffnung 22 der Einspritzdüse 1 werden Flüssigkeitströpfchen 5 ausgestossen, und zwar derart, dass die Flüssigkeitströpfchen 5 im Wesentlichen in einer Ebene (yz-Ebene), hier Flüssigkeitseinspritzebene 50 genannt, austreten. Von einer "Ebene" kann hier näherungsweise gesprochen werden, weil die Ausdehnung der räumlichen Flüssigkeitströpfchenverteilung in x-Richtung viel kleiner ist als in y- bzw. z-Richtung; diese Tatsache ist aus der Darstellung der Figuren 1-3 nicht sofort ersichtlich, weil in diesen - um der Klarheit willen - die Längenverhältnisse in den drei Raumrichtungen nicht unbedingt massstabgetreu wiedergegeben sind.

Ferner wird aus mindestens einer Gasaustrittsöffnung, im Beispiel von Figur 1 aus zwei Gasaustrittsöffnungen 24.1, 24.2, der Einspritzdüse 1 jeweils ein Hilfsgas 6.1, 6.2 ausgestossen. Jede Gasaustrittsöffnung 24.1, 24.2 ist so gestaltet und bezüglich der Flüssigkeitsaustrittsöffnung 22 so angeordnet, dass das Hilfsgas 6.1, 6.2 im Wesentlichen in einer Gaseinspritzebene 60.1, 60.2 austritt. Im hier dargestellten Beispiel liegt die Gaseinspritzebene 60.1, 60.2 im Wesentlichen parallel zur Flüssigkeitseinspritzebene 50 und ist von dieser beabstandet. Der Abstand der Flüssigkeitseinspritzebene 50 und der Gaseinspritzebene 60.1, 60.2 ist vorzugsweise derart gewählt, dass die Flüssigkeitströpfchen 5 und das Hilfsgas 6.1, 6.2 zumindest nach einer endlichen Flugstrecke in einer Durchmischungszone 7 miteinander in Kontakt kommen.

Die in **Figur 1(b)** dargestellte zweite Ausführungsform einer erfindungsgemässen Einspritzdüse 1 unterscheidet sich von derjenigen der Figur 1(a) dadurch, dass die erste Gasaustrittsöffnung 24.1 derart gestaltet ist, dass daraus das Hilfsgas 6.1 in einer gegenüber der Flüssigkeitseinspritzebene 50 leicht verkippten Ebene 60.1 ausgestossen wird. Der Kippwinkel β beträgt bspw. ca. 2°-20°, vorzugsweise ca. 10°. Eine solche Verkippung kann für eine effiziente Durchsetzung einer Gasströmung vorteilhaft sein, wie weiter unten erklärt wird.

**Figur 2** zeigt dieselbe Einspritzdüse 1 in derselben Ansicht wie Figur 1(a), jedoch bei vorhandener Gasströmung 8, welche schematisch mit Pfeilen angedeutet ist. Dabei wird angenommen, die Strömungsrichtung der Gasströmung 8 sei die (+x)-Richtung. Die ausgestossenen Medien 5, 6.1, 6.2 wechselwirken durch Stösse und/oder Reibung miteinander einerseits und mit der Gasströmung 8 andererseits. Durch die gegenseitige Wechselwirkung der Medien 5, 6.1, 6.2 werden diese Medien 5, 6.1, 6.2 in beide Richtungen y und z beschleunigt. Durch die Wechselwirkung der Medien 5, 6.1, 6.2 mit der Gasströmung 8 werden die Medien 5, 6.1, 6.2 in x-Richtung beschleunigt, d. h. aus der Flüssigkeitseinspritzebene 50 bzw. aus der Gaseinspritzebene 60.1, 60.2 abgelenkt. Diese Ablenkung würde zeitlich früher und stärker in Erscheinung treten, wenn die Flüssigkeitströpfchen 5 allein der Gasströmung 8 ausgesetzt wären; in diesem Fall würden die Flüssigkeitströpfchen 5 eine bloss geringe Distanz (in z-Richtung) erreichen. Das erfindungsgemäss gleichzeitig mit den Flüssigkeitströpfchen 5 ausgestossene Hilfsgas 6.1, 6.2 wirkt diesem unerwünschten Effekt jedoch in zumindest dreifacher Hinsicht entgegen:
- Erstens wirkt das Hilfsgas 6.1, 6.2 stabilisierend und kontrollierend auf die Flüssigkeitströpfchen 5, was ihre Grösse, den Öffnungswinkel α des Fächers (vgl. Fig. 3) und ihre Flugbahn betrifft. Im Gegensatz zur Lehre des eingangs erwähnten US-Patentes Nr. 6,267,301 wird also die anfängliche Grösse der Flüssigkeitströpfchen 5 durch das Hilfsgas 6 nicht verändert, insbesondere nicht zu kleineren Teilen zerstäubt.
- Zweitens schirmt das aus der stromaufwärts gelegenen Gasaustrittsöffnung 24.1 ausgestossene Hilfsgas 6.1 die Flüssigkeitströpfchen 5 vor der Gasströmung 8 zumindest nach dem Auswurf durch die Düse und auf einem Anfangsabschnitt der Flugbahn ab, indem die Teilchen des Hilfsgases 6.1 mit den Teilchen der Gasströmung 8 zusammenstossen und diese in (+z)-Richtung beschleunigen. So wird zunächst den Flüssigkeitströpfchen 5 ein Durchdringen der Strömungsgrenzschicht erleichtert; nach Durchqueren der Strömungsgrenzschicht wird die Ablenkung der Flüssigkeitströpfchen 5 in ihrer Flugbahn durch die Gasströmung 8 verzögert und dadurch ein tieferes Eindringen der Flüssigkeitströpfchen 5 in die Gasströmung 8 ermöglicht.
- Drittens übt das Hilfsgas 6.1, 6.2 einen Mitreiss- oder Beschleunigungseffekt auf die Flüssigkeitströpfchen 5 aus, indem es diese in (+z)-Richtung beschleunigt. Voraussetzung dafür ist natürlich, dass die Austrittsgeschwindigkeit des Hilfsgases 6.1, 6.2 grösser ist als diejenige der Flüssigkeitströpfchen 5.

Alle drei Effekte, der Stabilisierungs-, der Abschirm- und der Mitreisseffekt, bewirken, dass zumindest ein Teil der Flüssigkeitströpfchen 5 einen weiteren Weg in z-Richtung zurücklegt als ohne Hilfsgas 6.1, 6.2, ohne die anfängliche Tröpfchengrösse zu beeinflussen.

In **Figur 3** ist schematisch die Einspritzdüse 1 der Figuren 1(a), 1(b) oder 2 in einer Frontalansicht (in +(x)-Richtung der Gasströmung) dargestellt. Die Flüssigkeitströpfchen 5 und das Hilfsgas 6.1, 6.2 werden vorzugsweise in Form von Fächern in die Gasströmung 8 eingespritzt, wobei der Fächer in +(z)-Richtung, mit zunehmender Entfernung von der Einspritzdüse 1, divergiert. Der Öffnungswinkel α des Fächers beträgt bspw. ca. 20°-90°, vorzugsweise ca. 60°.

Die Öffnungswinkel α können für die Flüssigkeitströpfchen 5, für das stromaufwärts ausgestossene Hilfsgas 6.1 und/oder für das stromabwärts ausgestossene Hilfsgas 6.2 verschieden sein. So können bspw. drei Öffnungswinkel α_{6.1} ≠ α₅ ≠ α_{6.2} vorkommen, von denen zwei durchaus auch gleich sein können, z. B. α_{6.1} = α_{6.2}. Experimente haben unter Anderem die Erkenntnis gebracht, dass die Eindringtiefe des entsprechenden Mediums 5, 6.1, 6.2 in die Gasströmung 8 um so kleiner ist, je grösser der Öffnungswinkel α. Je nach Anwendung wird man die verschiedenen Parameter wie Öffnungswinkel α₅, α_{6.1}, α_{6.2}, Austrittsgeschwindigkeiten und/oder Massenströme (vgl. unten stehende Tab. I) der Medien 5, 6.1, 6.2 auf geeignete Art und Weise optimieren, um eine effiziente Durchsetzung der Gasströmung 8 mit Flüssigkeitströpfchen 5 zu erzielen.

**Figur 4** zeigt eine bevorzugte Ausführungsform der erfindungsgemässen Einspritzdüse 1 in einer perspektivischen Ansicht. Dieselbe Ausführungsform ist in **Figur 5** in einer Draufsicht und in **Figur 6** in einem Längsschnitt dargestellt. Die Einspritzdüse 1 beinhaltet einen Düsenkopf 2, einen Düsenkörper 3 sowie einen Flüssigkeitsanschlussstutzen 41 und einen Gasanschlussstutzen 43. Die Bestandteile sind bspw. aus Metall, vorzugsweise aus rostfreiem Stahl, gefertigt.

Der Düsenkopf 1 beinhaltet einen Flüssigkeitskanaleinsatz 21 und zwei Gaskanaleinsätze 23.1, 23.2, welche im Wesentlichen in einer Mittelebene der zylinderförmigen Einspritzdüse 1 angeordnet sind. Die Einspritzdüse 1 wird vorzugsweise so eingebaut, dass eine Grundfläche 20 des Düsenkopfes 2 mit einer Innenwand eines die zu durchsetzende Gasströmung 8 begrenzenden Kanals fluchtet.

Der Flüssigkeitskanaleinsatz 21 mündet in eine schlitzförmige Flüssigkeitsaustrittsöffnung 22 mit einer Länge von ca. 1.4 mm und einer Breite von ca. 0.4 mm. Die Flüssigkeitsaustrittsöffnung 22 liegt im Wesentlichen zentral auf einer Längsachse 10 der Einspritzdüse, wobei sie im hier diskutierten Ausführungsbeispiel um eine im Verhältnis zum Düsendurchmesser kleine Strecke von ca. 1.5 mm von der Längsachse 10 beabstandet sein kann.

In der Flüssigkeitsauswurfzone nahe der Flüssigkeitsaustrittsöffnung 22 entsteht ein Druckabfall und folglich ein Ansaugeffekt. Dadurch werden in der Gasströmung 8 Wirbel verursacht, welche den flachen Flüssigkeitsfächer deformieren bzw. destabilisieren und die Grössenverteilung der Flüssigkeitströpfchen 5 verändern könnten. Um diesen Effekt zu vermeiden oder doch zu vermindern, ragt der Flüssigkeitskanaleinsatz 21 bspw. um ca. 2 bis 9 mm und vorzugsweise um ca. 3 bis 5 mm aus der Grundfläche 20 des Düsenkopfes 2 in die Gasströmung 8 hinein. Dieser Vorsprung des Flüssigkeitskanaleinsatzes 21 stabilisiert und kontrolliert den Öffnungswinkel α sowie die Grössenverteilung und die Flugbahnen der Flüssigkeitströpfchen.

Für eine effiziente Verminderung der Wirbelbildung sollte die Flüssigkeitsaustrittsöffnung 22 höher über der Grundfläche 20 angeordnet sein als die Gasaustrittsöffnungen 24.1, 24.2. Besonders vorteilhaft ist es, wenn das Verhältnis des Höhenunterschieds bezüglich der Grundfläche 20 zwischen der Flüssigkeitsaustrittsöffnung 22 und jeder Gasaustrittsöffnung 24.1, 24.2 einerseits und der grössten Entfernung in der Grundfläche 20 zwischen den zwei am weitesten voneinander entfernten (Flüssigkeits- oder Gas-)Austrittsöffnungen 24.1, 24.2 andererseits zwischen 0.08 und 0.40 und vorzugsweise zwischen 0.12 und 0.20 liegt.

Die Gaskanaleinsätze 23.1, 23.2 münden jeweils in eine schlitzförmige Gasaustrittsöffnung 24.1, 24.2 mit einer Länge von ca. 2.1 mm und einer Breite von ca. 1.3 mm. Die stromaufwärts gelegene Gasaustrittsöffnung 24.1 liegt ca. 15 mm von der Flüssigkeitsaustrittsöffnung 22 entfernt. Der dazugehörige stromaufwärts gelegene Gaskanaleinsatz 23.1 ist vorzugsweise gegenüber der Düsenlängsachse 10 leicht verkippt, derart, dass das ausgestossene Hilfsgas 6.1 leicht gegen die Gasströmung 8 gerichtet ist (d. h. seine Geschwindigkeit eine Komponente in (-x)-Richtung hat), wenn die Düsenlängsachse 10 senkrecht zur Gasströmung 8 steht (d. h. in z-Richtung zeigt). Dies entspricht also im Wesentlichen der in Figur 1(b) schematisch dargestellten Ausführungsform. Der Kippwinkel β beträgt bspw. ca. 2°-20°, vorzugsweise ca. 10°. Dadurch schirmt das aus der stromaufwärts gelegenen Gasaustrittsöffnung 23.1 ausgestossene Hilfsgas 6.1 die Flüssigkeitströpfchen 5 noch effizienter von der Gasströmung 8 ab und ermöglicht ein möglichst weites Eindringen der Flüssigkeitströpfchen 5 in die Gasströmung 8.

Die stromabwärts gelegene Gasaustrittsöffnung 24.2 liegt ca. 10 mm von der Flüssigkeitsaustrittsöffnung 22 entfernt. Diese Entfernung ist also vorzugsweise kleiner als diejenige zwischen der stromaufwärts gelegenen Gasaustrittsöffnung 24.1 und der Flüssigkeitsaustrittsöffnung 22. Ausserdem ist der dazugehörige stromabwärts gelegene Gaskanaleinsatz 23.2 vorzugsweise parallel zur Düsenlängsachse 10. Die Einspritzdüse 1 ist also bezüglich Abstand und Richtung der Gaskanaleinsätze 23.1, 23.2 asymmetrisch. Hauptaufgabe des aus der stromabwärts gelegenen Gasaustrittsöffnung 24.2 ausgestossenen Hilfsgases 6.2 ist ein Mitreiss- und Stabilisierungseffekt auf die Flüssigkeitströpfchen 5, was wiederum ein möglichst weites Eindringen der Flüssigkeitströpfchen 5 in die Gasströmung 8 zur Folge hat. Die Gaskanaleinsätze 23.1, 23.2 liegen im Wesentlichen in der Grundfläche 20 des Düsenkopfes 2.

Die schlitzförmigen Flüssigkeits- bzw. Gasaustrittsöffnungen 22, 24.1, 24.2 sind so angeordnet, dass ihre Längsachsen parallel zueinander sind und senkrecht zur Gasströmung 8 (d. h. parallel zur y-Richtung) liegen. Sie sind derart gestaltet, dass die Flüssigkeits- bzw. Gasfächer einen Öffnungswinkel zwischen ca. 20° und 90°, vorzugsweise ca. 60°, aufweisen.

Der Düsenkopf 2 ist mittels zweier Befestigungsschrauben 25.1, 25.2, welche in entsprechende Schultern oder Flansche 26, 36 eingreifen, am Düsenkörper 3 befestigt.

Der Düsenkörper 3 weist einen Flüssigkeitszuführkanal 31, mit welcher die Flüssigkeit 5 dem Flüssigkeitskanaleinsatz 21 zugeführt wird, und einen Gaszuführkanal 33, mit welcher das Hilfsgas 6 den beiden Gaskanaleinsätzen 23.1, 23.2 zugeführt wird, auf.

In den Düsenkörper 3 sind ein Flüssigkeitsanschlussstutzen 41 und ein Gasanschlussstutzen 43 eingeschraubt, welche eine Flüssigkeitseintrittsöffnung 42 bzw. eine Gaseintrittsöffnung 44 aufweisen.

Wie das Ausführungsbeispiel von Figur 6 zeigt, sollte bei der Konstruktion der Einspritzdüse 1 der Sicherheitsaspekt besonders berücksichtigt werden. Es würde zu fatalen Schäden an Verdichter und Turbine führen, wenn sich Komponenten der Einspritzdüse 1 während des Betriebs lösen und mit der Luftströmung 8 in den Verdichter fliegen würden. Um dies zu verhindern, wurden die gefährdeten Komponenten wie der Flüssigkeitskanaleinsatz 21 oder die Gaskanaleinsätze 23.1, 23.2 mit einer sich nach oben verjüngenden Form bzw. schulterartigen Absätzen versehen. Ausserdem wurde darauf geachtet, dass Düsenteile wie die Einsätze 21, 23.1, 23.2 möglichst wenig über die Grundfläche 20 hinaus, d. h. in die Luftströmung 8 hinein, ragen. Vorsprünge an der Düse können nämlich unerwünschte Strömungseffekte in der Gasströmung 8 verursachen; nicht selten werden sie auch vom Wartungspersonal als Kletterhilfen missbraucht, wodurch sie beschädigt werden können.

Die in den Figuren 4-6 dargestellte Einspritzdüse 1 ist für Wasser als Flüssigkeit 5 und Luft als Hilfsgas 6.1, 6.2 konzipiert. Um eine Luftströmung 8 mit einer Geschwindigkeit am Einspritzort von bspw. 30-80 m/s und einem Massenstrom von bspw. 500 m³/s mit Wassertröpfchen 5 zu durchsetzen, werden beispielsweise die in **Tabelle I** aufgeführten Betriebsparameter gewählt.

**Tab. I**

| Parameter | Flüssigkeit 5 | Hilfsgas 6.1, 6.2 |
|---|---|---|
| Druck (Pa) | 4·10⁵ | 4·10⁵ |
| Fläche der Austrittsöffnung (m²) | 4.4·10⁻⁷ | 2×2.1·10⁻⁶ |
| Austrittsgeschwindigkeit (m/s) | 28 | 317 |
| Massenstrom (m³/s) | 1.3·10⁻⁵ | 2×1.7·10⁻³ |

Wie schon weiter oben erwähnt, können diese und andere Betriebsparameter wie z. B. der Fächer-Öffnungswinkel α variiert bzw. optimiert werden, um eine effiziente Benetzung und Reinigung der Verdichterschaufeln zu erzielen.

In einem Experiment ohne Gasströmung wurden mit der Einspritzdüse von Figuren 4-6 unter Verwendung der in Tab. I angegebenen Parameter für Flüssigkeit und Hilfsgas in einer Entfernung von 200 mm von der Düsengrundfläche (20) Wassertröpfchendurchmesser zwischen ca. 50 und 250 µm gemessen. Unter denselben Bedingungen, aber ohne Hilfsgas betrugen die Durchmesser ebenfalls zwischen ca. 50 und 250 µm. Dieses Resultat zeigt, dass die Verteilung der Wassertröpfchendurchmesser vom Hilfsgas nicht verändert wird.

In einem weiteren Experiment wurde die Einspritzdüse von Figuren 4-6 horizontal gehalten, wobei sich die Düsenlängsachse 10 in einer Höhe von 1200 mm über der Unterlage befand. Flüssigkeit und Hilfsgas (falls eingesetzt) wurden mit einem Druck von jeweils 4·10⁵ Pa ausgestossen. Ohne Hilfsgas wurde Niederschlag auf der Unterlage in Distanzen von 800 bis 2000 mm von der Düse beobachtet, während die Wurfweiten mit Hilfsgas zwischen 800 und 4500 mm betrugen. Mit dem Hilfsgas werden die Flüssigkeitströpfchen also wesentlich weiter transportiert als ohne.

Selbstverständlich ist die Erfindung nicht auf die oben diskutierte und in den Zeichnungen dargestellte Ausführungsform beschränkt. Bei Kenntnis der Erfindung wird der Fachmann in der Lage sein, weitere Ausführungsformen zu entwerfen. So kann z. B. die in den Figuren 4-6 gezeigte schlitzförmige Flüssigkeitsaustrittsöffnung 22 durch mehrere bspw. kreisförmige Flüssigkeitsaustrittsöffnungen mit kleinem Durchmesser ersetzt werden, welche auf einer parallel zur y-Richtung liegenden Geraden angeordnet sind. Die Gesamtheit der aus diesen Flüssigkeitsaustrittsöffnungen austretenden Flüssigkeitströpfchen definiert ebenfalls eine Flüssigkeitseinspritzebene. Dasselbe gilt auch für die Gasaustrittsöffnungen 24.1, 24.2. Die asymmetrische Anordnung der Gasaustrittsöffnungen 24.1, 24.2 bezüglich der Flüssigkeitsaustrittsöffnung 22 ist fakultativ, wenn auch vorteilhaft.

Ferner braucht die Flüssigkeitseinspritzebene 50 nicht senkrecht zur Gasströmung 8 zu stehen. Vielmehr sind beliebige Anstellwinkel, vorzugsweise zwischen 15° und 165° bezüglich der Gasströmung 8, möglich. Dies kann bspw. durch Halterung der erfindungsgemässen Düse in einem Kugelgelenk verwirklicht werden, analog zur Düsenhalterung, die im eingangs diskutierten US-Patent Nr. 5,193,976 beschrieben ist.

Zur Illustration der Vielfalt der Varianten der Erfindung zeigt **Figur 7** in schematischen Draufsichten vier Ausführungsformen von erfindungsgemässen Einspritzdüsen. Der Düsenkopf 2 ist, analog zu Fig. 5, als Kreisscheibe dargestellt, könnte aber selbstverständlich auch andere Formen aufweisen. Schematisch eingezeichnet ist jeweils auch die zu durchsetzende Gasströmung 8. Figur 7 will verdeutlichen, dass verschiedene Anordnungen der Flüssigkeitsaustrittsöffnungen 22, 22.1, 22.2 und Gasaustrittsöffnungen 24, 24.1-24.6 möglich sind. Die Ausführungsform von **Figur 7(a)** weist eine zentrale Flüssigkeitsaustrittsöffnung 22 und je eine stromaufwärts und stromabwärts gelegene Gasaustrittsöffnung 24.1 bzw. 24.2 auf. Die Austrittsöffnungen 22, 24.1 und 24.2 sind in Strömungsrichtung nebeneinander angeordnet und haben jeweils eine schlitzförmige Form, wobei ihre Längsachsen parallel zueinander und senkrecht zur Strömungsrichtung sind; ihre Anordnung erinnert an die römische Ziffer III. Diese Ausführungsform entspricht also im Wesentlichen derjenigen von Fig. 5. In der Ausführungsform von **Figur 7(b)** ist die schlitzförmige Flüssigkeitsaustrittsöffnung 22 ebenfalls zwischen zwei schlitzförmigen Gasaustrittsöffnungen 24.1, 24.2 angeordnet, aber ihre Längsachse ist parallel zur Strömungsrichtung und senkrecht zu den Längsachsen der Gasaustrittsöffnungen 24.1, 24.2; die Anordnung erinnert an den Grossbuchstaben H. In der Ausführungsform von **Figur 7(c)** ist eine zentrale, kreisscheibenförmige Flüssigkeitsaustrittsöffnung 22 von einer konzentrischen kreisringförmigen Gasaustrittsöffnung 24 umgeben. **Figur 7(d)** zeigt eine Ausführungsform mit zwei Flüssigkeitsaustrittsöffnungen 22.1, 22.2 und jeweils drei beidseitig davon angeordneten Gasaustrittsöffnungen 24.1-24.6. Bei Kenntnis der Erfindung wird der Fachmann im Stande sein, weitere Anordnungen von Flüssigkeitsaustrittsöffnungen und Gasaustrittsöffnungen zu entwerfen, die der jeweiligen Anwendung optimal angepasst sind.

Schliesslich ist in **Figur 8** ein erfindungsgemässer Gasturbinenverdichter 9 in einem schematischen Längsschnitt durch die Einlaufpartie gezeigt. Die Einlaufpartie weist einen eine Gehäusewandung 92 aufweisenden Ansaugluftkanal 91 auf. Ferner ist ein Teil einer zu reinigenden Verdichterbeschaufelung 93 dargestellt. In der Gehäusewandung 92 ist mindestens eine Einspritzdüse 1.1-1.4 montiert. Die Einspritzdüse weist eine Flüssigkeitseintrittsöffnung 42 und mindestens eine mit der Flüssigkeitseintrittsöffnung 42 verbundene Flüssigkeitsaustrittsöffnung 22 auf, und ferner eine Gaseintrittsöffnung 44 und mindestens eine mit der Gaseintrittsöffnung 44 verbundene Gasaustrittsöffnung 24.1, 24.2. Die Einspritzdüse ist vorzugsweise gemäss dem Ausführungsbeispiel der Fig. 4-6 ausgebildet.

Die in Fig. 8 dargestellte Ausführungsform ist ein einfaches, schematisches Beispiel. Es können mehr Einspritzdüsen vorgesehen sein, und diese können an verschiedenen Orten der Gehäusewandung 92, insbesondere auch rund um den Querschnitt herum, verteilt sein. Die Erfindung ist nicht auf Gasturbinenverdichter beschränkt, sondern auch für den Einsatz in Strömungskanälen anderer Strömungsmaschinen geeignet.

### Bezugszeichenliste:

- 1: Einspritzdüse
- 10: Düsenlängsachse

- 2: Düsenkopf
- 20: Grundfläche
- 21: Flüssigkeitskanaleinsatz
- 22, 22.1, 22.2: Flüssigkeitsaustrittsöffnung
- 23.1, 23.2: Gaskanaleinsatz
- 24, 24.1-24.6: Gasaustrittsöffnung
- 25.1, 25.2: Befestigungsschrauben
- 26: Schulter

- 3: Düsenkörper
- 31: Flüssigkeitszuführkanal
- 33: Gaszuführkanal
- 36: Schulter

- 41: Flüssigkeitsanschlussstutzen
- 42: Flüssigkeitseintrittsöffnung
- 43: Gasanschlussstutzen
- 44: Gaseintrittsöffnung

- 5: Flüssigkeitströpfchen
- 50: Flüssigkeitseinspritzebene

- 6.1, 6.2: Hilfsgas
- 60.1, 60.2: Gaseinspritzebene

- 7: Durchmischungszone

- 8: Gasströmung

- 9: Gasturbinenverdichter
- 91: Ansaugluftkanal
- 92: Gehäusewandung
- 93: Verdichterbeschaufelung

- x, y, z: Kartesische Koordinaten

- α: Öffnungswinkel des Flüssigkeitströpfchenbzw. Gasfächers
- β: Kippwinkel einer Einspritzebene

## Patentansprüche

1. Verfahren zum Durchsetzen einer in Richtung (x) strömenden Gasströmung (8) mit Flüssigkeitströpfchen (5), wobei
die Flüssigkeitströpfchen (5) in die Gasströmung (8) eingespritzt werden, und wobei ein Hilfsgas (6.1, 6.2) gleichzeitig mit den Flüssigkeitströpfchen (5) in die Gasströmung (8) eingespritzt wird,
**dadurch gekennzeichnet, dass** die Einspritzgeschwindigkeit des Hilfsgases (6.1, 6.2) grösser ist als die Einspritzgeschwindigkeit der Flüssigkeitströpfchen (5),
so dass das eingespritzte Hilfsgas (6.1, 6.2) die eingespritzten Flüssigkeitströpfchen (5) bezüglich Flugbahn und Grösse stabilisiert, teilweise von der Gasströmung (8) abschirmt und/oder in die Gasströmung (8) mitreisst.

2. Verfahren nach Anspruch 1, wobei die Einspritzgeschwindigkeit des Hilfsgases (6.1, 6.2) mindestens zweimal grösser, vorzugsweise mindestens fünfmal grösser und beispielsweise mindestens zehnmal grösser ist als die Einspritzgeschwindigkeit der Flüssigkeitströpfchen (5)

3. Verfahren nach einem der vorangehenden Ansprüche, wobei
die Flüssigkeitströpfchen (5) im Wesentlichen in einer Flüssigkeitseinspritzebene (50) in die Gasströmung (8) eingespritzt werden und
ein Hilfsgas (6.1, 6.2) gleichzeitig mit den Flüssigkeitströpfchen (5) in die Gasströmung (8) eingespritzt wird, wobei
das Hilfsgas (6.1, 6.2) im Wesentlichen in einer Gaseinspritzebene (60.1, 60.2) in die Gasströmung (8) eingespritzt wird.

4. Verfahren nach Anspruch 3, wobei die Flüssigkeitseinspritzebene (50) im Wesentlichen senkrecht zur Strömungsrichtung (x) der Gasströmung (8) steht.

5. Verfahren nach Anspruch 3 oder 4, wobei die Gaseinspritzebene (60.2) im Wesentlichen parallel zur Flüssigkeitseinspritzebene (50) liegt und von dieser beabstandet ist.

6. Verfahren nach Anspruch 3 oder 4, wobei die Gaseinspritzebene (60.1) gegenüber der Flüssigkeitseinspritzebene (50) leicht verkippt ist, derart, dass die Geschwindigkeitskomponente in Richtung (x) der Gasströmung (8) beim Hilfsgas (6.1) kleiner ist als bei den Flüssigkeitströpfchen (5), und der Kippwinkel (β) bspw. ca. 2° bis 20°, vorzugsweise ca. 10°, beträgt.

7. Verfahren nach einem der Ansprüche 3-6, wobei beidseits der Flüssigkeitseinspritzebene (50) jeweils ein Hilfsgas (6.1, 6.2) in einer ersten bzw. einer zweiten Gaseinspritzebene (60.1, 60.2) in die Gasströmung (8) eingespritzt wird, welche erste bzw. zweite Gaseinspritzebene (60.1, 60.2) im Wesentlichen parallel zur Flüssigkeitseinspritzebene (50) liegen und von dieser beabstandet sind.

8. Verfahren nach Anspruch 7, wobei der Abstand zwischen der stromaufwärts gelegenen Gaseinspritzebene (60.1) und der Flüssigkeitseinspritzebene (50) grösser gewählt wird als der Abstand zwischen der stromabwärts gelegenen Gaseinspritzebene (60.2) und der Flüssigkeitseinspritzebene (50).

9. Verfahren nach einem der vorangehenden Ansprüche, wobei die Flüssigkeitströpfchen (5) und das Hilfsgas (6.1, 6.2) in Form von Fächern in die Gasströmung (8) eingespritzt werden, wobei die Öffnungswinkel (α) der Fächer vorzugsweise zwischen 20° und 90°, bspw. 60°, betragen.

10. Verfahren nach einem der vorangehenden Ansprüche, wobei die Flüssigkeitströpfchen (5) und das Hilfsgas (6.1, 6.2) aus nebeneinander angeordneten schlitzförmigen Austrittsöffnungen (22; 24.1, 24.2) ausgestossen werden, deren Längsachsen vorzugsweise parallel zueinander sind.

11. Anwendung des Verfahrens nach einem der vorangehenden Ansprüche zum Durchsetzen der Ansaugluftströmung (8) eines Gasturbinenverdichters mit Tröpfchen (5) einer Reinigungsflüssigkeit.

12. Verfahren nach Anspruch 1, wobei die Gasströmung Ansaugluft (8) ist, die durch einen Ansaugluftsammler eines Gasturbinenverdichters hindurchströmt, wobei die Flussigkeitströpfchen Tröpfchen einer Reinigungsflüssigkeit sind, die in den Ansaugluftsammler eingespritzt werden und die Flüssigkeitströpfchen (5) von der Strömung der Ansaugluft (8) zu den zu reinigenden Teilen des Gasturbinenverdichters transportiert werden, um diesen zu reinigen.

13. Einspritzdüse (1) zur Durchführung des Verfahrens Zum durch setzen einer in Richtung (X) strömenden Gasströmung (8) mit Flussigkeitströpfchen nach einem der Ansprüche 1-12, beinhaltend
eine die Einspritzdüse (1) zur Gasströmung (8) hin begrenzende Grundfläche (20),
eine Flüssigkeitseintrittsöffnung (42) und eine Gaseintrittsöffnung (44),
mindestens eine mit der Flüssigkeitseintrittsöffnung (42) verbundene Flüssigkeitsaustrittsöffnung (22), welche auf mindestens einem aus der Grundfläche (20) in die Gasströmung (8) hineinragenden Vorsprung (21) angeordnet ist, und
mindenstens ein Gaskanaleinsatz (23.1, 23.2), der in eine Gasaustrittöffnung (24.1, 24.2) mündet, wobei die mindestens eine Gasaustrittöffnung (24.1, 24.2) mit der Gaseintrittsöffnung (44) verbunden ist,
**dadurch gekennzeichnet, dass**
die mindestens eine Flüssigkeitsaustrittsöffnung (22) derart gestaltet ist, dass eine in die Flüssigkeitseintrittsöffnung (42) eingeleitete Flüssigkeit (5) in Form von im Wesentlichen in einer Flüssigkeitseinspritzebene (50) verteilten Flüssigkeitströpfchen aus ihr austritt, wobei die Flüssigkeitseinspritzebene (50) im Wesentlichen senkrecht zur Strömungsrichtung (x) der Gasströmung (8) steht, und die mindestens eine Gasaustrittsöffnung (24.1, 24.2) derart gestaltet und bezüglich der mindestens einen Flüssigkeitsaustrittsöffnung (22) angeordnet ist, dass ein in die Gaseintrittsöffnung (44) eingeleitetes Hilfsgas (6.1, 6.2) im Wesentlichen in mindestens einer Gaseinspritzebene (60.1, 60.2) aus ihr austritt, und dass der mindestens eine Gaskanaleinsatz (23.1) gegenüber der Einspritzdüsenlängsachse um einen Kippwinkel (β) verkippt ist, so dass, wenn die Gasaustrittsöffnung (24.1) relativ zur mindestens einen Flüssigkeitsaustrittsöffnung (22) gasströmungsaufwärts gelegen ist, die Gasaustrittsöffnung (24.1) das ausgestossene Hilfsgas gegen die Gasströmung richtet und dadurch das Hilfsgas die ausgestossenen Flüssigkeitströpfchen von der Gasströmung abschirmt.

14. Einspritzdüse (1) nach Anspruch 13, wobei die Höhe des mindestens einen Vorsprungs (21) über der Grundfläche (20) 2 bis 9 mm und vorzugsweise 3 bis 5 mm beträgt.

15. Einspritzdüse (1) nach Anspruch 13 oder 14, wobei die mindestens eine Flüssigkeitsaustrittsöffnung (22) höher über der Grundfläche (20) angeordnet ist als die mindestens eine Gasaustrittsöffnung (24.1, 24.2), bspw. derart, dass das Verhältnis des Höhenunterschieds bezüglich der Grundfläche (20) zwischen der mindestens einen Flüssigkeitsaustrittsöffnung (22) und der mindestens einen Gasaustrittsöffnung (24.1, 24.2) einerseits und der grössten Entfernung in der Grundfläche (20) zwischen den zwei am weitesten voneinander entfernten Flüssigkeits- und/oder Gasaustrittsöffnungen (22, 24.1, 24.2) andererseits zwischen 0.08 und 0.40 und vorzugsweise zwischen 0.12 und 0.20 liegt.

16. Einspritzdüse (1) nach einem der Ansprüche 13-15, wobei die mindestens eine Flüssigkeitsaustrittsöffnung (22) und die mindestens eine Gasaustrittsöffnung (24.1) derart gestaltet sind, dass die Gaseinspritzebene (60.1) gegenüber der Flüssigkeitseinspritzebene (50) leicht verkippt ist, und der Kippwinkel (β) zwischen 2°und 20°, vorzugsweise ca. 10°, beträgt.

17. Einspritzdüse (1) nach einem der Ansprüche 13-16, wobei die Einspritzdüse (1) eine Flüssigkeitsaustrittsöffnung (22) und beidseits davon je eine Gasaustrittsöffnung (24.1, 24.2) aufweist, derart, dass beidseits der Flüssigkeitseinspritzebene (50) jeweils ein Hilfsgas (6.1, 6.2) in einer ersten bzw. einer zweiten Gaseinspritzebene (60.1, 60.2) ausgestossen wird, und die beiden Gaseinspritzebenen (60.1, 60.2) im Wesentlichen parallel zur Flüssigkeitseinspritzebene (50) liegen und von dieser beabstandet sind.

18. Einspritzdüse (1) nach Anspruch 17, wobei die Abstände zwischen den Gasaustrittsöffnungen (24.1, 24.2) und der Flüssigkeitsaustrittsöffnung (22) ungleich sind.

19. Einspritzdüse (1) nach einem der Ansprüche 13-18, wobei die mindestens eine Flüssigkeitsaustrittsöffnung (22) und die mindestens eine Gasaustrittsöffnung (24.1, 24.2) derart gestaltet sind, dass die Flüssigkeitströpfchen (5) und das Hilfsgas (6.1, 6.2) in Form von Fächern ausgestossen werden, wobei die Öffnungswinkel (α) der Fächer vorzugsweise zwischen 20° und 90°, bspw. 60°, betragen.

20. Einspritzdüse (1) nach einem der Ansprüche 13-19, wobei die mindestens eine Flüssigkeitsaustrittsöffnung (22) und die mindestens eine Gasaustrittsöffnung (24.1, 24.2) nebeneinander angeordnet sind und längliche Formen aufweisen, wobei ihre Längsachsen parallel zueinander sind.

21. Strömungsmaschine, bspw. Gasturbinenverdichter (9), mit einem eine Gehäusewandung (92) aufweisenden Strömungskanal, bspw. einem Ansaugluftkanal (91),
**dadurch gekennzeichnet, dass**
in der Gehäusewandung (92) mindestens eine Einspritzdüse (1) nach einem der Ansprüche 13-20 montiert ist.

## Claims

1. A method for permeating a gas flow (8) flowing in the direction (x) with liquid droplets (5), wherein the liquid droplets (5) are injected into the gas flow (8), and wherein an auxiliary gas (6.1, 6.2) is simultaneously injected into the gas flow (8) with the liquid droplets (5),
**characterised in that** the injection rate of the auxiliary gas (6.1, 6.2) is greater than the injection rate of the liquid droplets (5), so that the injected auxiliary gas (6.1, 6.2) stabilises the injected liquid droplets (5) with respect to trajectory and size, shields them from the gas flow (8) to some extent and/or is entrained into the gas flow (8).

2. The method according to Claim 1, wherein the injection rate of the auxiliary gas (6.1, 6.2) is at least twice as large, preferably at least five times as large and for example at least ten times as large as the injection rate of the liquid droplets (5).

3. The method according to one of the preceding claims, wherein
the liquid droplets (5) are essentially injected into the gas flow (8) in a liquid injection plane (50) and an auxiliary gas (6.1, 6.2) is simultaneously injected into the gas flow (8) with the liquid droplets (5), wherein
the auxiliary gas (6.1, 6.2) is essentially injected into the gas flow (8) in a gas injection plane (60.1, 60.2).

4. The method according to Claim 3, wherein the liquid injection plane (50) is essentially perpendicular to the flow direction (x) of the gas flow (8).

5. The method according to Claim 3 or 4, wherein the gas injection plane (60.2) is essentially parallel to the liquid injection plane (50) and is distanced from the latter.

6. The method according to Claim 3 or 4, wherein the gas injection plane (60.1) is slightly tilted with respect to the liquid injection plane (50) in such a manner that the speed component in the direction (x) of the gas flow (8) is smaller in the case of the auxiliary gas (6.1) than in the case of the liquid droplets (5), and the tilting angle (β) is for example approx. 2° to 20°, preferably approx. 10°.

7. The method according to one of Claims 3-6, wherein on both sides of the liquid injection plane (50) an auxiliary gas (6.1, 6.2) is in each case injected into the gas flow (8) in a first or second gas injection plane (60.1, 60.2), which first and second gas injection planes (60.1, 60.2) are essentially parallel to the liquid injection plane (50) and are distanced from the latter.

8. The method according to Claim 7, wherein the distance between the gas injection plane (60.1) located upstream and the liquid injection plane (50) is selected to be larger than the distance between the gas injection plane (60.2) and the liquid injection plane (50) located downstream.

9. The method according to one of the preceding claims, wherein the liquid droplets (5) and the auxiliary gas (6.1, 6.2) are injected into the gas flow (8) in a fan shape, wherein the opening angles (α) of the fans are preferably between 20° and 90°, for example 60°.

10. The method according to one of the preceding claims, wherein the liquid droplets (5) and the auxiliary gas (6.1, 6.2) are emitted from mutually adjacently arranged slot-shaped outlet openings (22; 24.1, 24.2), the longitudinal axes of which are preferably parallel to one another.

11. Use of the method according to one of the preceding claims for the permeation of the intake air flow (8) of a gas turbine compressor with droplets (5) of a cleaning liquid.

12. The method according to Claim 1, wherein the gas flow (8) is intake air which flows through an intake plenum of a gas turbine compressor, wherein the liquid droplets are droplets of a cleaning liquid which are injected into the intake plenum and the liquid droplets (5) are transported by the flow of the intake air (8) to the parts of the gas turbine compressor to be cleaned, in order to clean the said parts of the gas turbine compressor.

13. An injection nozzle (1) for carrying out the method for permeating a gas flow (8) flowing in the direction (x) with liquid droplets according to one of Claims 1-12, containing
a base surface (20) which delimits the injection nozzle (1) in the direction of the gas flow (8), a liquid inlet opening (42) and a gas inlet opening (44),
at least one liquid outlet opening (22) connected to the liquid inlet opening (42), which liquid outlet opening is arranged on at least one projection (21) protruding into the gas flow (8) from the base surface (20), and
at least one gas channel insert (23.1, 23.2) which opens into a gas outlet opening (24.1, 24.2), wherein the at least one gas outlet opening (24.1, 24.2) is connected to the gas inlet opening (44),
**characterised in that**
the at least one liquid outlet opening (22) is shaped in such a manner that a liquid (5) introduced into the liquid inlet opening (42) leaves it in the form of liquid droplets essentially distributed in a liquid injection plane (50), wherein the liquid injection plane (50) is essentially perpendicular to the flow direction (x) of the gas flow (8), and the at least one gas outlet opening (24.1, 24.2) is shaped and arranged in such a manner with respect to the at least one liquid outlet opening (22) that an auxiliary gas (6.1, 6.2) introduced into the gas inlet opening (44) essentially leaves it in at least one gas injection plane (60.1, 60.2), and
**in that** the at least one gas channel insert (23.1) is tilted with respect to the injection nozzle longitudinal axis by a tilting angle (β), so that, if the gas outlet opening (24.1) is located upstream in the gas flow relatively to at least one liquid outlet opening (22), the gas outlet opening (24.1) directs the emitted auxiliary gas against the gas flow and as a result the auxiliary gas shields the emitted liquid droplets from the gas flow.

14. The injection nozzle (1) according to Claim 13, wherein the height of the at least one projection (21) above the base surface (20) is 2 to 9 mm and preferably 3 to 5 mm.

15. The injection nozzle (1) according to Claim 13 or 14, wherein the at least one liquid outlet opening (22) is arranged higher above the base surface (20) than the at least one gas outlet opening (24.1, 24.2), for example, in such a manner that the ratio of the height difference with respect to the base surface (20) between the at least one liquid outlet opening (22) and the at least one gas outlet opening (24.1, 24.2) on the one hand and the greatest distance in the base surface (20) between the two liquid and/or gas outlet openings (22, 24.1, 24.2) furthest from one another on the other hand is between 0.08 and 0.40 and preferably between 0.12 and 0.20.

16. The injection nozzle (1) according to one of Claims 13-15, wherein the at least one liquid outlet opening (22) and the at least one gas outlet opening (24.1) are shaped in such a manner that the gas injection plane (60.1) is slightly tilted with respect to the liquid injection plane (50), and the tilting angle (β) is between 2° and 20°, preferably approx. 10°.

17. The injection nozzle (1) according to one of Claims 13-16, wherein the injection nozzle (1) has a liquid outlet opening (22) and has a gas outlet opening (24.1, 24.2) on both sides thereof in each case, in such a manner that on both sides of the liquid injection plane (50) an auxiliary gas (6.1, 6.2) is in each case emitted in a first or second gas injection plane (60.1, 60.2), and the two gas injection planes (60.1, 60.2) are essentially parallel to the liquid injection plane (50) and are distanced from the latter.

18. The injection nozzle (1) according to Claim 17, wherein the distances between the gas outlet openings (24.1, 24.2) and the liquid outlet opening (22) are not equal.

19. The injection nozzle (1) according to one of Claims 13-18, wherein the at least one liquid outlet opening (22) and the at least one gas outlet opening (24.1, 24.2) are shaped in such a manner that the liquid droplets (5) and the auxiliary gas (6.1, 6.2) are emitted in the shape of fans, wherein the opening angles (α) of the fans are preferably between 20° and 90°, for example 60°.

20. The injection nozzle (1) according to one of Claims 13-19, wherein the at least one liquid outlet opening (22) and the at least one gas outlet opening (24.1, 24.2) are mutually adjacently arranged and have longitudinal shapes, wherein their longitudinal axes are parallel to one another.

21. A turbo machine, for example gas turbine compressor (9), with a flow channel, for example an air inlet channel (91), having a housing wall (92),
**characterised in that**
at least one injection nozzle (1) according to one of Claims 13-20 is mounted in the housing wall (92).

## Revendications

1. Procédé pour le passage d'un flux de gaz (8) s'écoulant dans une direction (x), avec des gouttelettes de liquide (5), dans lequel
les gouttelettes de liquide (5) sont injectées dans le flux de gaz (8), et dans lequel un gaz auxiliaire (6.1, 6.2) est dans le flux de gaz (8) en même temps que les gouttelettes de liquide (5),
**caractérisé en ce que** la vitesse d'injection du gaz auxiliaire (6.1, 6.2) est supérieure à la vitesse d'injection des gouttelettes de liquide (5), de sorte que le gaz auxiliaire (6.1, 6.2) injecté stabilise les gouttelettes de liquide (5) quant à leur taille et leur trajectoire, tout en les isolant partiellement du flux de gaz (8) et/ou en les entraînant avec le flux de gaz (8).

2. Procédé selon la revendication 1, dans lequel la vitesse d'injection du gaz auxiliaire (6.1, 6.2) est au moins deux fois supérieure, de préférence au moins cinq fois supérieure et par exemple au moins dix fois supérieure à la vitesse d'injection des gouttelettes de liquide (5).

3. Procédé selon l'une des revendications précédentes,
dans lequel les gouttelettes de liquide (5) sont injectées dans le flux de gaz (8) essentiellement dans une zone d'injection de liquide (50), et
un gaz auxiliaire (6.1, 6.2) est injecté dans le flux de gaz (8) en même temps que les gouttelettes de liquide (5),
le gaz auxiliaire (6.1, 6.2) étant injecté dans le flux de gaz (8) essentiellement dans une zone d'injection de gaz (60.1, 60.2).

4. Procédé selon la revendication 3, dans lequel la zone d'injection de liquide (50) est essentiellement perpendiculaire à la direction d'écoulement (x) du flux de gaz (8).

5. Procédé selon l'une des revendications 3 ou 4, dans lequel la zone d'injection de gaz (60.2) est essentiellement parallèle à la zone d'injection de liquide (50), tout en étant espacée de celle-ci.

6. Procédé selon l'une des revendications 3 ou 4, dans lequel la zone d'injection de gaz (60.1) est légèrement inclinée par rapport à la zone d'injection de liquide (50), de sorte que les composants de vitesse dans la direction du flux de gaz (8) sont plus petits pour le gaz auxiliaire (6.1) que pour les gouttelettes de liquide (5), et l'angle d'inclinaison (β) mesure par exemple environ 2° à 20°, de préférence environ 10°.

7. Procédé selon l'une des revendications 3 à 6, dans lequel un gaz auxiliaire (6.1, 6.2) est injecté dans une première ou une deuxième zone d'injection de gaz (60.1, 60.2), des deux côtés de la zone d'injection de liquide (50), lesquelles première ou deuxième zones d'injection de gaz (60.1, 60.2) étant essentiellement parallèles à la zone d'injection de liquide (50), tout en étant espacées de celle-ci.

8. Procédé selon la revendication 7, dans lequel l'espacement entre la zone d'injection de gaz (60.1) située en amont du flux et la zone d'injection de liquide (50) est supérieur à l'espacement entre la zone d'injection de gaz (60.2) située en aval du flux et la zone d'injection de liquide (50).

9. Procédé selon l'une des revendications précédentes,
dans lequel les gouttelettes de liquide (5) et le gaz auxiliaire (6.1, 6.2) sont injectés dans le flux de gaz (8) sous forme d'éventails, l'angle d'ouverture (α) des éventails mesurant de préférence entre 20° et 90°, par exemple 60°.

10. Procédé selon l'une des revendications précédentes,
dans lequel les gouttelettes de liquide (5) et le gaz auxiliaire (6.1, 6.2) sont évacués par des ouvertures de sortie (22 ; 24.1, 24.2) en forme de fentes, disposées les unes à côté des autres, dont les axes longitudinaux s'étendent de préférence parallèlement les uns par rapport aux autres.

11. Application du procédé selon l'une des revendications précédentes, pour le passage d'un flux d'air d'aspiration (8) d'un compresseur de turbine à gaz, avec des gouttelettes (5) d'un liquide de nettoyage.

12. Procédé selon la revendication 1, dans lequel le flux de gaz est de l'air d'aspiration (8) s'écoulant par un collecteur d'air d'aspiration d'un compresseur de turbine à gaz, dans lequel les gouttelettes de liquide sont des gouttelettes d'un liquide de nettoyage injectées dans le collecteur d'air d'aspiration, et
dans lequel les gouttelettes de liquide (5) sont transportées par le flux d'air d'aspiration (8) vers les parties à nettoyer du compresseur de turbine à gaz, afin de nettoyer celui-ci.

13. Injecteur (1) pour la mise en oeuvre du procédé pour le passage d'un flux de gaz (8) s'écoulant dans la direction (x), avec des gouttelettes de liquide (5), selon l'une des revendications 1 à 12, comprenant
une surface de base (20) limitant l'injecteur (1) vers le flux de gaz (8),
une ouverture d'admission de liquide (42) et une ouverture d'admission de gaz (44),
au moins une ouverture d'évacuation de liquide (22) reliée à l'ouverture d'admission de liquide (42), disposée sur au moins une saillie (21) s'introduisant dans le flux de gaz (8) depuis la surface de base (20), et
au moins un insert de canal de gaz (23.1, 23.2) débouchant dans une ouverture d'évacuation de gaz (24.1, 24.2), dans lequel
l'au moins une ouverture d'évacuation de gaz (24.1, 24.2) est reliée à l'ouverture d'admission de gaz (44),
**caractérisé en ce que**
l'au moins une ouverture d'évacuation de liquide (22) est conçue de telle manière, qu'un liquide (5) introduit dans l'ouverture d'admission de liquide (42) sort de celle-ci sous forme de gouttelettes de liquide réparties essentiellement sur une zone d'injection de liquide (50), la zone d'injection de liquide (50) étant essentiellement perpendiculaire à la direction d'écoulement (x) du flux de gaz (8), et **en ce que** l'au moins une ouverture d'évacuation de gaz (24.1, 24.2) est conçue et disposée de telle manière par rapport à l'au moins une ouverture d'évacuation de liquide (22), qu'un gaz auxiliaire (6.1, 6.2) introduit dans l'ouverture d'admission de gaz (44) sort de celle-ci essentiellement dans au moins une zone d'injection de gaz (60.1, 60.2), et
**en ce que** l'au moins un insert de canal de gaz (23.1) est incliné par rapport à l'axe longitudinal de l'injecteur selon un angle d'inclinaison (β), si bien que, lorsque l'ouverture d'évacuation de gaz (24.1) se trouve en amont du flux de gaz par rapport à l'au moins une ouverture d'évacuation de liquide (22), l'ouverture d'évacuation de gaz (24.1) dirige le gaz auxiliaire sortant contre le flux de gaz, et le gaz auxiliaire isole ainsi les gouttelettes de liquide par rapport au flux de gaz.

14. Injecteur (1) selon la revendication 13, dans lequel la hauteur de l'au moins une saillie (21) au-dessus de la surface de base (20) mesure entre 2 et 9 mm, et de préférence entre 3 et 5 mm.

15. Injecteur (1) selon l'une des revendications 13 ou 14,
dans lequel l'au moins une ouverture d'évacuation de liquide (22) est disposée plus haut au-dessus de la surface de base (20) que l'au moins une ouverture d'évacuation de gaz (24.1, 24.2),
par exemple de telle manière que le rapport entre, d'une part, la différence entre la hauteur de l'au moins une ouverture d'évacuation de liquide (22) et celle de l'au moins une ouverture d'évacuation de gaz (24.1, 24.2) par rapport à la surface de base (20), et, d'autre part, la distance maximale dans la surface de base (20) entre les deux ouvertures d'évacuation de liquide et/ou de gaz (22, 24.1, 24.2) les plus espacées, est de 0.08 à 0.40 et de préférence de 0.12 à 0.20.

16. Injecteur (1) selon l'une des revendications 13 à 15,
dans lequel l'au moins une ouverture d'évacuation de liquide (22) et l'au moins une ouverture d'évacuation de gaz (24.1) sont conçues de telle manière, que la zone d'injection de gaz (60.1) est légèrement inclinée par rapport à la zone d'injection de liquide (50), et l'angle d'inclinaison (β) mesure entre 2° et 20°, de préférence environ 10°.

17. Injecteur (1) selon l'une des revendications 13 à 16,
dans lequel l'injecteur (1) comporte une ouverture d'évacuation de liquide (22) et une ouverture d'évacuation de gaz (24.1, 24.2) de chaque côté de celle-ci, de sorte qu'un gaz auxiliaire (6.1, 6.2) sort des deux côtés de la zone d'injection de liquide (50), dans une première et une deuxième zone d'injection de gaz (60.1, 60.2), et que les deux zone d'injection de gaz (60.1, 60.2) sont essentiellement parallèles à la zone d'injection de liquide (50), tout en étant espacées de celle-ci.

18. Injecteur (1) selon la revendication 17, dans lequel les espacements entre les ouvertures d'évacuation de gaz (24.1, 24.2) et l'ouverture d'évacuation de liquide (22) sont inégaux.

19. Injecteur (1) selon l'une des revendications 13 à 18,
dans lequel l'au moins une ouverture d'évacuation de liquide (22) et l'au moins une ouverture d'évacuation de gaz (24.1, 24.2) sont conçues de telle manière, que les gouttelettes de liquide (5) et le gaz auxiliaire (6.1, 6.2) sortent sous forme d'éventails, les angles d'ouverture (α) des éventails mesurant de préférence entre 20° et 90°, par exemple 60°.

20. Injecteur (1) selon l'une des revendications 13 à 19,
dans lequel l'au moins une ouverture d'évacuation de liquide (22) et l'au moins une ouverture d'évacuation de gaz (24.1, 24.2) sont disposées les unes à côté des autres et présentent des formes allongées, leurs axes longitudinaux s'étendant parallèlement les uns par rapport aux autres.

21. Machine d'écoulement, par exemple un compresseur de turbine à gaz (9), avec un canal d'écoulement comportant une paroi de boîtier (92), par exemple un canal d'air d'aspiration (91),
**caractérisé en ce que**
au moins un injecteur (1) selon l'une des revendications 13 à 20 est monté dans la paroi de boîtier (92).
